# EUROPÄISCHE PATENTANMELDUNG

(11) **EP 0 712 652 A1**
(43) Veröffentlichungstag der Anmeldung: **22.05.1996**
(21) Anmeldenummer: 95117887.0
(22) Anmeldetag: 14.11.1995
(51) Int. Cl.: B01D 29/01, B41F 35/00

(54) **Filtereinrichtung**

(30) Priorität: 18.11.1994 DE 4441040
(71) Anmelder: FILTERWERK MANN & HUMMEL GMBH, D-71631 Ludwigsburg (DE)
(72) Erfinder: Kühlborn, Manfred, D-71638 Ludwigsburg (DE)
(74) Vertreter: Voth, Gerhard, Dipl.-Ing.

(57) **Zusammenfassung**

Es wird eine Filtereinrichtung bestehend aus einem im wesentlichen zick-zack-förmig gefalteten Filterelement (11) vorgeschlagen. Dieses Filterelement ist plattenförmig ausgebildet und mit einer umlaufenden Dichtung (14) versehen und in einer wannenförmigen Aufnahmevorrichtung (10) angeordnet. Dieses Filterelement überdeckt im wesentlichen diese wannenförmige Aufnahme. Verwendet wird die Filtereinrichtung insbesondere in einer Druckmaschine zur Filtrierung der Reinigungsflüssigkeit.

## Beschreibung

Die Erfindung betrifft eine Filtereinrichtung bestehend aus einem im wesentlichen zick-zack-förmig gefalteten Filterelement, welches plattenförmig ausgebildet und mit einer umlaufenden Dichtung versehen ist.

Solche Filtereinrichtungen sind beispielsweise im Automobilbau bekannt und dienen zur Filtrierung der Luft für den Innenraum von Kraftfahrzeugen. Das Filterelement ist dabei in einen Belüftungskanal eingebaut und beispielsweise als Kassettenfilter in eine entsprechende Aufnahme installiert.

Ein solches Filter ist aus der EP 438 639 A1 bekannt. Dort ist ein Filtereinsatz aus Vliesstoff beschrieben, der selbsttragend ist, wobei die Außenkanten des Faltenpacks umgeknickt sind und an der entsprechenden Knickkante des benachbarten Faltenendes eng anliegend fixiert sind. Die Fixierung erfolgt mittels einer thermischen Verschweißung, beispielsweise über Vibrationsschweißen.

Der Erfindung liegt die Aufgabe zugrunde, eine Filtereinrichtung zu schaffen, bei der ein Filtermedium bzw. ein Filterelement, welches in einfacher Weise aufgebaut und in ein bestehendes System einsetzbar ist.

Diese Aufgabe wird ausgehend von dem Oberbegriff durch die Merkmale des Kennzeichens des Hauptanspruchs gelöst.

Der wesentliche Vorteil der Filtereinrichtung besteht darin, daß das Filterelement in eine bereits vorhandene wannenförmige Aufnahme angeordnet wird und damit diese Aufnahme in einen Reinbereich und einen Schmutzbereich aufsplittet. Außerdem ist das Filterelement gleichzeitig der Speicher für das zu reinigende Medium. Der Schmutzbereich wird insgesamt von dem Filterelement erfaßt. Die zu reinigende Flüssigkeit gelangt durch die Ausgestaltung des Filterelements nicht an Teile der Aufnahme und verursacht damit keine Verschmutzung dieser Aufnahme.

Gemäß einer Ausgestaltung der Erfindung wird vorgeschlagen, das Filterelement mit einer Auffangfläche zu versehen. Diese Auffangfläche ist beispielsweise ein breiter Streifen des Filterelements, der als eine Art Lasche seitlich vom Filterelement absteht und damit Teile der wannenförmigen Aufnahme überdeckt.

Eine weitere vorteihafte Ausgestaltung der Erfindung sieht vor, das Filterelement mit Knickstellen zu versehen. Damit besteht die Möglichkeit, das Handling dieses Elements wesentlich zu vereinfachen, da Filterelemente mit sehr großen Ausdehnungen auf ein kompaktes Maß gefaltet bzw. geklappt werden können.

Sofern das Filterelement verschmutzt ist, wird es aus der wannenförmigen Aufnahme entfernt. Das Entfernen läßt sich dadurch vereinfachen, daß am Filterelement Haltegriffe oder Schlaufen vorgesehen sind, die in einem Bereich angeordnet werden, der nicht von Schmutzflüssigkeit benetzt wird.

Eine vorteilhafte Anwendung der Filtereinrichtung ist bei Druckmaschinen, insbesondere bei Bogenoffsetdruckmaschinen zu sehen. Es ist allgemein bekannt, daß die Farbwerke gelegentlich gesäubert werden müssen. Dieses Säubern geschieht mit einer Reinigungsflüssigkeit. Die mit Farbe und Wasser beladene Reinigungsflüssigkeit gelangt in eine wannenförmige Aufnahme, in welcher sich die Filtereinrichtung befindet.

Die Filtereinrichtung bzw. das Filterelement filtert die Druckfarbe aus den restlichen Bestandteilen aus, so daß lediglich die Reinigungsflüssigkeit und evtl. Wasser abgeleitet wird. Sofern das Filterelement seine Standzeit erreicht hat, wird es durch ein neues Filterelement ersetzt.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispiels näher erläutert. Es zeigt:
- Figur 1: eine Draufsicht auf eine Filtereinrichtung,
- Figur 2: eine Schnittdarstellung der in Figur 1 gezeigten Filtereinrichtung.

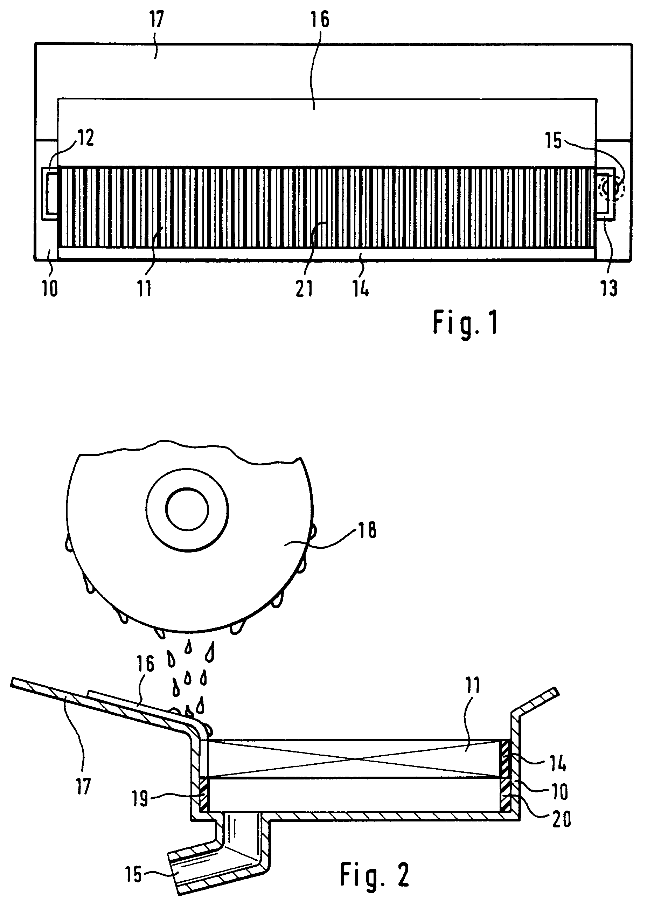

Die Figur 1 zeigt eine Auffangwanne 10, in welcher ein zick-zack-förmig gefaltetes Filterelement 11 eingesetzt ist. Das Filterelement weist Entnahmeschlaufen 12, 13 und eine im vorderen Bereich längs verlaufende Dichtung 14. Die Auffangwanne 10 ist mit einer Ablauföffnung 15 für die gereinigte Flüssigkeit versehen. Das Filterelement ist auf der der Dichtung 14 gegenüberliegenden Seite mit einer Auffangfläche 16 versehen, deren Funktion in Figur 2 näher erläutert wird.

Figur 2 zeigt die Filtereinrichtung in einer Schnittdarstellung. Die Auffangwanne 10 mit der Ablauföffnung 15 besitzt eine schräg angeordnete Einlauffläche 17. Die Auffangfläche 16 des Filterelements liegt auf dieser Einlauffläche 17 auf. Die zu reinigende Flüssigkeit tropft von einer oberhalb der Filtereinrichtung angeordneten Walze 18 ab, sammelt sich in den Taschen des Filtereinsatzes 11. Während die auszufilternden Bestandteile sich in diesen Taschen anlagern, gelangt die gereinigte Flüssigkeit nach unten in die Wanne und von dort über den Auslauf 15 in einen entsprechenden Behälter. Als Abstandshalter weist das Filterelement 11 seitlich Abstandsstreifen 19, 20 auf. Zur zuverlässigen Befestigung des Filterelements besitzt dieses rechtsseitig ein Dichtungselement 14, mit welchem eine Verspannung des Filterelements in der wannenförmigen Aufnahme erfolgt.

## Patentansprüche

1. Filtereinrichtung bestehend aus einem im wesentlichen zick-zack-förmig gefalteten Filterelement, welches plattenförmig ausgebildet ist und mit einer umlaufenden Dichtung versehen ist, dadurch gekennzeichnet, daß eine wannenförmige Aufnahmevorrichtung (10) für Flüssigkeit vorgesehen ist und das Filterelement (11 die wannenförmige Aufnahme im wesentlichen überdeckt.

2. Filtereinrichtung nach Anspruch 1, dadurch gekennzeichnet, daß das Filterelement (11) eine Auffangfläche (16) aufweist, die sich seitlich längs des Filterelements erstreckt.

3. Filtereinrichtung nach einem der vorherigen Ansprüche, dadurch gekennzeichnet, daß das Filterelement (11) vordefinierte Knickstellen (21) aufweist, die ein Einklappen und/oder Zusammenfalten ermöglichen.

4. Filtereinrichtung nach einem der vorherigen Ansprüche, dadurch gekennzeichnet, daß das Filterelement (11) Schlaufen (12, 13) und/oder Haltegriffe zur Handhabung aufweist.

5. Filtereinrichtung nach einem der vorherigen Ansprüche, dadurch gekennzeichnet, daß die wannenförmige Aufnahme (10) einen Ablauf (15) für die gereinigte Flüssigkeit aufweist.

6. Filtereinrichtung nach einem der vorherigen Ansprüche, dadurch gekennzeichnet, daß an der wannenförmigen Aufnahme (10) eine Rakeleinrichtung angeordnet ist und das Filterelement (11) und/oder die Auffangfläche (16) sich bis an die Rakeleinrichtung erstreckt.

7. Filtereinrichtung bestehend aus einem im wesentlichen zick-zack-förmig gefalteten Filterelement, welches plattenförmig ausgebildet ist und mit einer umlaufenden Dichtung versehen ist, gekennzeichnet durch die Verwendung in einer Druckmaschine zur Filtrierung der Reinigungsflüssigkeit
